# EUROPEAN PATENT APPLICATION

(11) **EP 1 278 228 A1**
(43) Date of publication of application: **22.01.2003**
(21) Application number: 01999954.9
(22) Date of filing: 05.12.2001
(51) Int. Cl.: H01J 29/87, H04N 5/65

(54) **CATHODE RAY TUBE**

(30) Priority: 05.12.2000 JP 2000369380
(71) Applicant: Sony Corporation, Tokyo 141-0001 (JP)
(72) Inventor: SANTOKU, Masataka, Shinagawa-ku, Tokyo 141-0001 (JP); ASAKI, Reo, Shinagawa-ku, Tokyo 141-0001 (JP); OKADA, Masamichi, Shinagawa-ku, Tokyo 141-0001 (JP); HASHIMOTO, Mitsuo, Shinagawa-ku, Tokyo 141-0001 (JP)
(74) Representative: Müller, Frithjof E., Dipl.-Ing.
(86) International application number: JP0110631
(87) International publication number: WO02047108

(57) **Abstract**

A cathode ray tube in which a reduction in weight can be contrived and scattering of glass upon implosion can be prevented effectively. The cathode ray tube comprises an HS band (2) surrounding the peripheral edge of a panel (11), and a resin panel (3) disposed in the state of covering the surface of the panel (11) and connected to the HS band (2). The surface of the panel (11) and the resin panel (3) may be fixed with an adhesive, the resin panel (3) and the HS band- (2) may be fixed with an adhesive, the resin panel (3) and the HS band (2) may be mechanically fixed by use of bolt/nut pairs, a wire or the like, and the resin panel (3) and the HS band (2) may be connected through fitting members (21) for fitting to a display device casing which are provided on the HS band (2).

## Description

### Technical Field

The present invention relates to a cathode ray tube of which vacuum resistance and explosion-proof characteristics can be enhanced, and particularly to one in which a lightweight resin panel is fitted to the surface of a cathode ray tube panel.

### Background Art

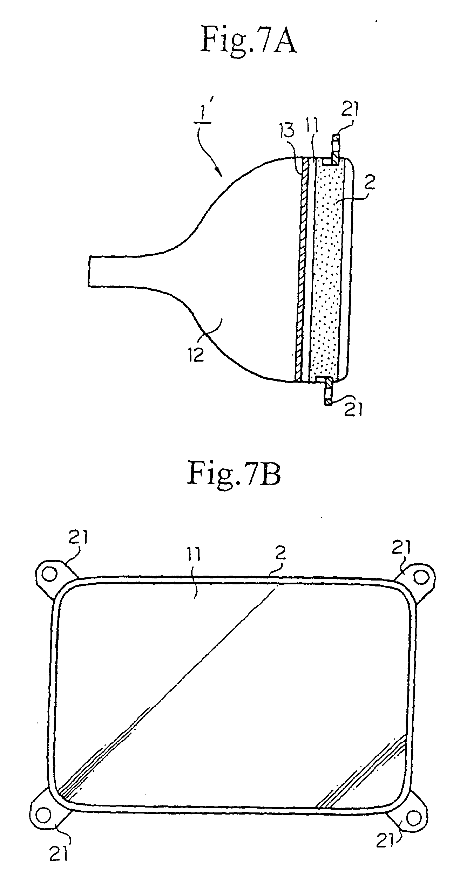

Figs. 7A and 7B are schematic views for illustrating a conventional cathode ray tube, in which Fig. 7A is a side view, and Fig. 7B is a front view. Namely, a glass vessel of the cathode ray tube 1' has a structure in which a panel 11 and a funnel 12 are joined by a frit glass 13, and an aperture grille which is a color selection mechanism, an electron gun and the like are sealed in the inside.

An HS band (heat shrink band) 2 for fastening a panel skirt portion in order to enhance explosion-proof characteristics and fitting members (generally called "ears") 21 for holding the cathode ray tube, welded to the HS band 2, are fitted to an outer peripheral portion of the panel 11 of the glass bulb.

Since the inside of the vessel is maintained in a vacuum condition, a pressure of 1 atm is always exerted on the glass bulb. Therefore, the glass bulb constituting the cathode ray tube must satisfy required performances as to vacuum resistance and explosion-proof characteristics so as to fulfill the characteristics as a vacuum vessel.

In general, in order to realize these performances in the vacuum vessel using a glass, a method of controlling the material thickness of the glass is used. Namely, in order to secure the strength of the glass bulb, it is necessary to enlarge the material thickness of the glass. As for the explosion-proof characteristics, also, a larger glass material thickness is more advantageous.

In recent years, the color cathode ray tube has had the tendency toward a larger screen, and the material thickness of the glass of the cathode ray tube tends to increase as the size of the screen increases. Attendant on this, the weight of the glass has also been increasing. For example, in the case of a 36-inch class of cathode ray tube, the weight of the glass including the panel and the funnel is as large as more than 50 kg. A further increase in the size of the cathode ray tube causes a further increase in the weight of the glass, and is difficult to actually carry out.

In order to solve the problem of the increase in weight due to the increase in screen size of the color cathode ray tube from the viewpoint of energy saving and cost saving, a reduction in weight of the glass has been investigated. This is to achieve a reduction in weight of the glass by a method of enhancing the mechanical strength of the glass by a tempering technique and thereby reducing the material thickness of the glass. By this method, it is possible to reduce the material thickness of the glass while securing vacuum-resisting strength.

As for the explosion-proof characteristics upon the reduction in weight of the glass, however, an increase in the stress on the glass and the reduction in weight of the glass result in that implosion energy increases and it becomes difficult to obtain sufficient explosion-proof characteristics.

As a reinforcing method for enhancing the explosion-proof characteristics, for example, there is a method of adhering a resin sheet to a panel face plate and an outer peripheral portion of side surfaces and shrink fitting an HS band thereon, as disclosed in Japanese Patent Laid-open No. Hei 8-77950. According to this method, however, the joint strength between the HS band and the panel and the resin sheet is low, and the resin sheet is also sucked in upon implosion, so that it is difficult to prevent the scattering of glass when the implosion energy is increased.

### Disclosure of Invention

The present invention has been made in order to solve the above-mentioned problems. Namely, a cathode ray tube according to the present invention comprises an explosion-proof band surrounding the peripheral edge of a cathode ray tube panel, and a resin panel disposed in the state of covering the surface of the cathode ray tube panel and connected to the explosion-proof band.

The surface of the cathode ray tube panel and the resin panel may be fixed by an adhesive, the resin panel and the explosion-proof band may be fixed by an adhesive, the resin panel and the explosion-proof band may be mechanically fixed by use of bolt/nut pairs, a wire or the like, and the resin panel and the explosion-proof band may be connected through fitting members for fitting to a display device casing which are provided on the explosion-proof band.

According to the present invention as above, the surface of the cathode ray tube panel is covered with the resin panel, and the resin panel is connected to the explosion-proof band. Therefore, it is possible to supplement the explosion-proof characteristics of the cathode ray tube panel by the lightweight resin panel. In addition, it is possible to prevent the resin panel from being sucked into the inside of the cathode ray tube panel upon implosion, and to hinder the scattering of the panel glass toward the front side by the resin panel.

### Brief Description of Drawings

Figs. 1A and 1B are schematic views for illustrating First Embodiment;
Figs. 2A and 2B are schematic views for illustrating Second Embodiment;
Figs. 3A and 3B are schematic views for illustrating Third Embodiment;
Figs. 4A and 4B are schematic views for illustrating Fourth Embodiment;
Figs. 5A and 5B are schematic views for illustrating Fifth Embodiment;
Figs. 6A and 6B are schematic views for illustrating Sixth Embodiment; and
Figs. 7A and 7B are schematic views for illustrating a conventional cathode ray tube.

### Best Mode for Carrying Out the Invention

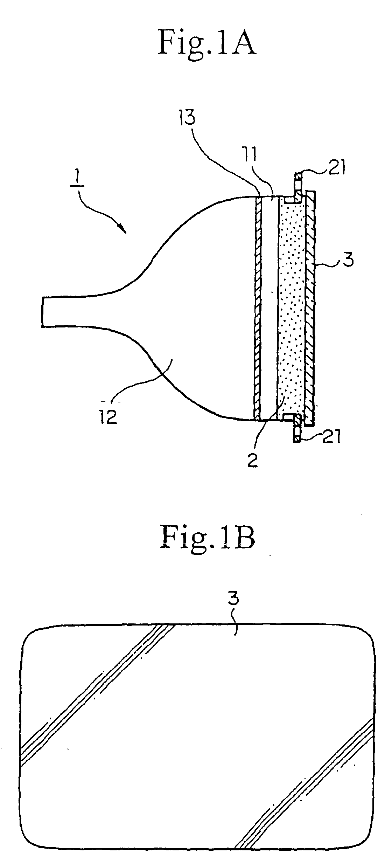

Now, embodiments of the present invention will be described below. Figs. 1A and 1B are schematic views for illustrating First Embodiment, in which Fig. 1A is a side view, and Fig. 1B is a front view of a resin panel. A cathode ray tube 1 according to this embodiment has a structure in which a panel 11 and a funnel 12 are joined by a frit glass 13, and an aperture grille which is a color selection mechanism, an electron gun and the like are sealed in the inside thereof.

An HS band (heat shrink band) 2 as an explosion-proof band for fastening a panel skirt portion in order to enhance explosion-proof characteristics is fitted to an outer peripheral portion of the panel 11 of a glass bulb. Fitting portions (generally called "ears") 21 for holding the cathode ray tube on a bezel of a display device casing are fitted to the HS band 2 by welding or the like.

In such a cathode ray tube 1, in this embodiment, for the purpose of preventing the scattering of glass from the front surface of the panel 11 in order to enhance explosion-proof characteristics, a resin panel 3 is fitted to the surface (front surface) of the panel 11, and the resin panel 3 is fixed to the HS band 2.

At the time of implosion of the cathode ray tube 1, the glass constituting the vacuum vessel is sucked into the inside of the bulb, is reflected in the inside, and scattered to the exterior through a screen opening portion of the bezel. Here, where the resin panel 3 is simply adhered to the surface of the panel 11 by an adhesive or the like, upon implosion, the front surface portion of the panel 11 adhered to the resin panel 3 is integrally sucked into the inside of the bulb, and it is impossible to prevent the scattering of the glass from the front surface of the panel 11.

In this embodiment, in order to prevent the scattering of the glass from the front surface of the panel 11, the resin panel 3 is fixed to the HS band 2, whereby the resin panel 3 can be prevented from being sucked into the inside of the bulb upon implosion, and an effect as a shield plate against the scattering of glass can be obtained.

In First Embodiment, for fixing the resin panel 3 to the HS band 2 by the adhesive, panel side end portions of the HS band 2 are set on roughly the same surface as the surface of the panel 11, whereby the flat surface form resin panel 3 can be fixed to both the surface of the panel 11 and end portions of the HS band 2.

In addition, with the surface (front surface) of the panel 11 and the resin panel 3 fixed by adhesion with an adhesive or the like, a role of shock absorption relative to the surface of the panel 11 is played.

The material of the resin panel 3 is selected in consideration of optical properties such as refractive index, mechanical properties such as strength and coefficient of expansion, and environmental resistance properties such as degradation. In concrete, examples of the material include polyethylene terephthalate (PET), polycarbonate (PC), acrylic resin and the like. As the adhesive, a UV-curable type resin and the like may be mentioned.

The shape of the resin panel 3 is analogous to the outer circumferential shape of the panel 11 as shown in Fig. 1B, and the resin panel 3 is slightly larger than the HS band 2 in size. With the resin panel 3 thus fixed to the HS band 2 and with the HS band 2 fitted to the bezel through the fitting members 21, the resin panel 3 is equivalently fixed to the bezel, whereby the resin panel 3 can be prevented from being sucked into the inside upon implosion of the cathode ray tube 1, and scattering of glass pieces through the opening portion of the set can be prevented.

Particularly, even where the material thickness of glass is reduced by use of a lightweight glass bulb and implosion energy is increased, explosion-proof characteristics can be enhanced with a minimized increase in weight.

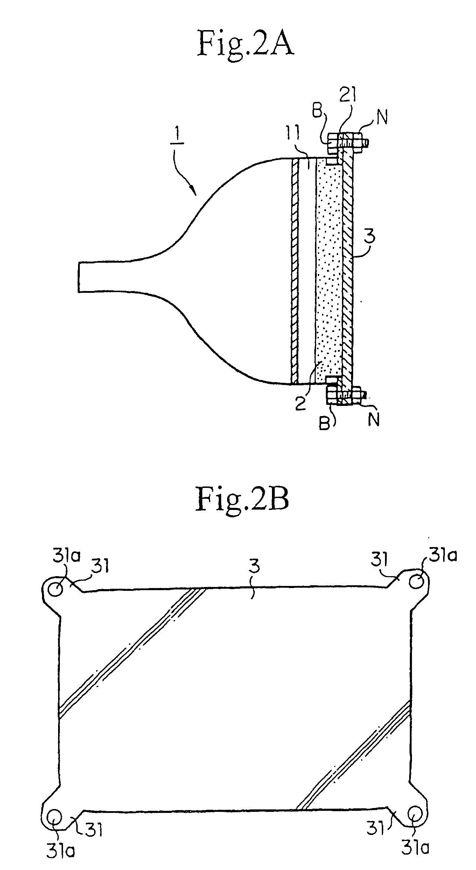

Next, Second Embodiment will be described. Figs. 2A and 2B are schematic views for illustrating Second Embodiment, in which Fig. 2A is a side view, and Fig. 2B is a front view of a resin panel. In a cathode ray tube 1 according- to Second Embodiment, the resin panel 3 to be fitted to the surface of a panel 11 and an HS band 2 are fixed through mechanical fixing to fitting members 21 welded to the HS band 2 by pairs of bolt B and nut N.

For such fixing, as shown in Fig. 2B, projected portions 31 and holes 31a are provided at outer peripheral portions (positions corresponding to the fitting members 21 of the HS band 2) of the resin panel 3, the holes 31a of the projected portions 31 are aligned with holes in the fitting members 21 of the HS band 2, and the bolts B are respectively passed through the aligned holes. Then, the nuts N are fastened to the bolts B, whereby the resin panel 3 is fixed. Actually, the bezel and the HS band 2 are fixed by the bolts B.

In Second Embodiment, in the same manner as in First Embodiment, panel side end portions of the HS band 2 are set on roughly the same surface as the front surface of the panel 11, whereby the flat surface form resin panel 3 can be fixed to both the surface of the panel 11 and end portions of the HS band 2. In addition to the fixing of the resin panel 3 and the fitting members 21 of the HS band 2 by the combination of the bolts B and the nuts N, the surface of the panel 11 and the resin panel 3 may be fixed by adhesion with an adhesive or the like.

In such fixing, with the resin panel 3 provided with the projected portions 31 and the holes 31a, the resin panel 3 can be fixed to the HS band 2 easily and assuredly, and scattering of glass pieces upon implosion of the cathode ray tube 1 can be prevented. In addition, the bolts B and the nuts N for fixing the cathode ray tube 1 and the bezel can be utilized, so that the resin panel 3 can be fixed by use of a reduced number of component parts.

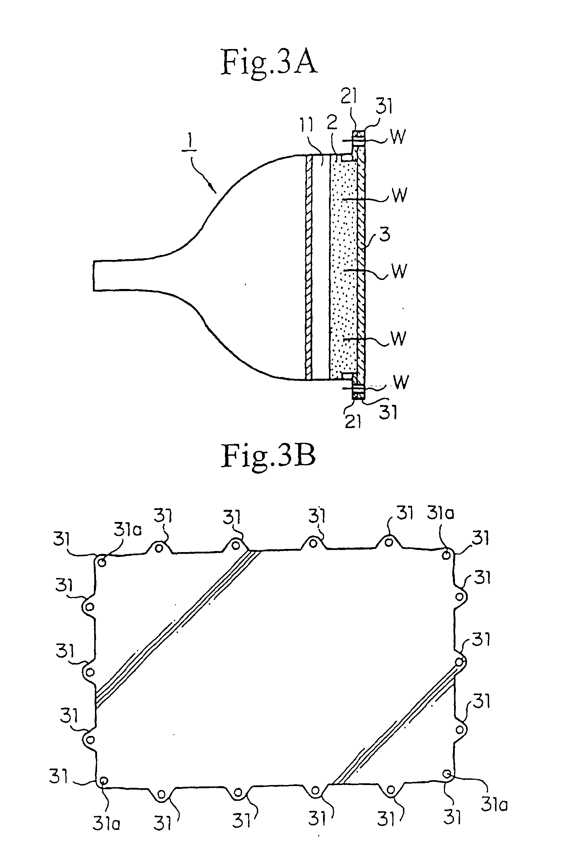

Next, Third Embodiment will be described. Figs. 3A and 3B are schematic views for illustrating Third Embodiment, in which Fig. 3A is a side view, and Fig. 3B is a front view of a resin panel. In a cathode ray tube 1 according to Third Embodiment, the resin panel 3 to be fitted to the surface of a panel 11 and an HS band 2 are fixed by use of a wire W.

Namely, as shown in Fig. 3B, a plurality of projected portions 3 provided with holes 31a are provided at outer peripheral portions of the resin panel 3, the resin panel 3 is adhered to the panel 11 of the cathode ray tube 1 and the HS band 2 with a UV-curing resin, and the wire W is passed through the holes 31a of the projected portions 31 of the resin panel 3 and is fixed to the fitting portions 21 of the HS band 2 or to a main body of the HS band 2.

By this, the resin panel 3 and the HS band 2 can be fixed at a multiplicity of points, the resin panel 3 can be prevented from being sucked into the inside upon implosion, and scattering of glass pieces can be prevented.

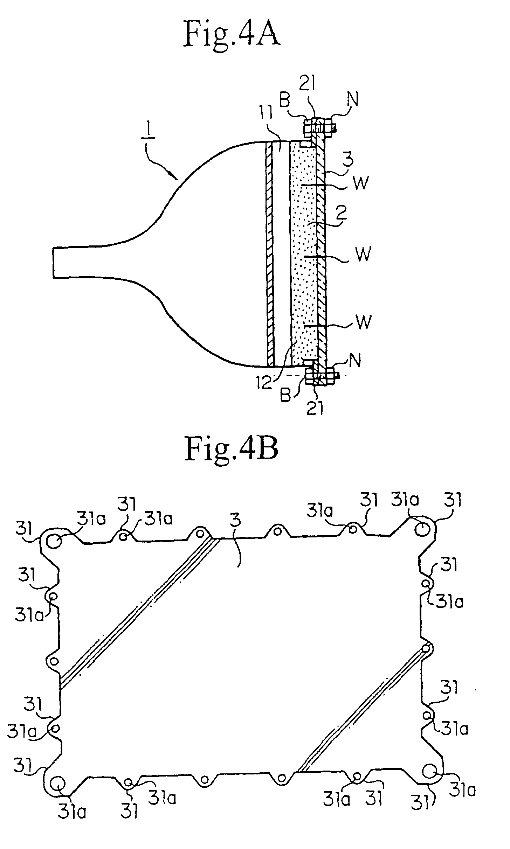

Next, Fourth Embodiment will be described. Figs. 4A and 4B are schematic views for illustrating Fourth Embodiment, in which Fig. 4A is a side view, and Fig. 4B is a front view of a resin panel. In a cathode ray tube 1 according to Fourth Embodiment, the resin panel 3 to be fitted to the surface of a panel 11 and an HS band 2 are fixed by use of pairs of bolt B and nut N and a wire W.

Namely, as shown in Fig. 4B, a plurality of projected portions 31 provided with holes 31a are provided at outer peripheral portions of the resin panel 3, and fixing by the bolt B and the nut N is conducted at each of the holes 31a of the projected portions 31 corresponding to fitting members 21 of the HS band 2, whereas fixing by the wire W is conducted at the holes 31a of the other projected portions 31.

By such fixing, the resin panel 3 and the HS band 2 can be fitted very rigidly, and barrier property against the scattering of glass upon implosion can be enhanced.

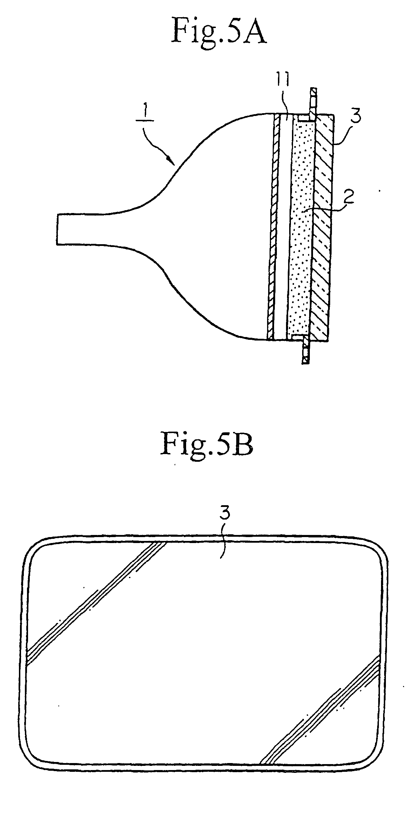

Next, Fifth Embodiment will be described. Figs. 5A and 5B are schematic views for illustrating Fifth Embodiment, in which Fig. 5A is a side view, and Fig. 5B is a front view of a resin panel. In a cathode ray tube 1 according to Fifth Embodiment, the resin panel 3 is three-dimensionally molded in conformity with the shape of a panel 11 of the cathode ray tube 1, is fitted to the panel 11 from the front side of the panel 11 so as to cover the panel 11, and is adhered with a UV-curing resin.

Namely, as shown in Fig. 5B, the resin panel 3 is formed in a dish shape opened on one side, and is fitted from the front surface side of the panel 11 of the cathode ray tube 1, and the resin panel 3 and an HS band 2 and the panel 11 are fixed with a UV-curing adhesive or the like.

By use of such a resin panel 3, the resin panel 3 can be easily fitted to the panel 11, and the projected portions for fitting can be unnecessitated, so that natural appearance can be realized. With the resin panel 3 and the HS band 2 connected, the resin panel 3 can be prevented from being sucked into the inside upon implosion, and scattering of glass pieces can be prevented.

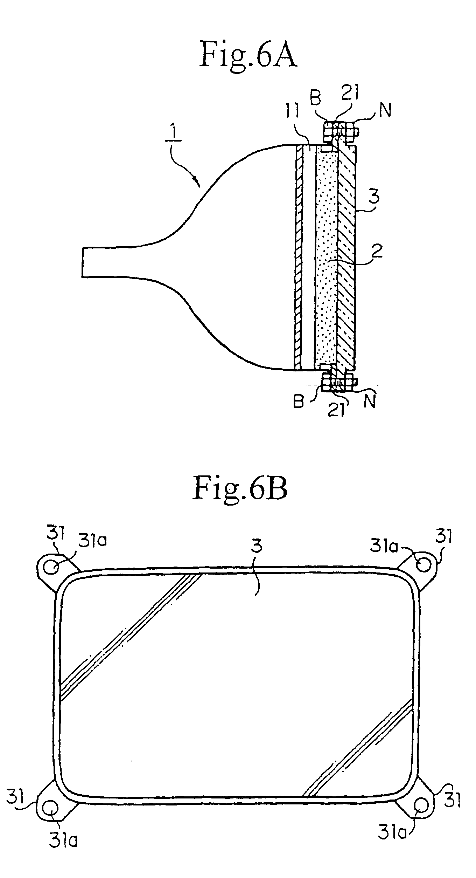

Next, Sixth Embodiment will be described. Figs. 6A and 6B are schematic views for illustrating Sixth Embodiment, in which Fig. 6A is a side view, and Fig. 6B is a front view of a resin panel. In a cathode ray tube 1 according to Sixth Embodiment, the resin panel 3 is three-dimensionally molded in conformity with the shape of a panel 11 of the cathode ray tube 1, and is fitted to the panel 11 so as to cover the panel 11 from the front side thereof, and fitting members 21 of the panel 11 and the resin panel 3 are fixed by pairs of bolt B and nut N.

For such fixing, as shown in Fig. 6B, the resin panel 3 is formed in a dish shape opened on one side, and is fitted to the panel 11 of the cathode ray tube 1 so as to cover the panel 11 from the front side thereof, and the resin panel 3 and an HS band 2 and the panel 11 are fixed with a UV-curing adhesive or the like.

Further, projected portions 31 provided with holes 31a are provided at outer peripheral portions (positions corresponding to the fitting members 21 of the HS band 2) of the resin panel 3, the holes 31a of the projected portions 31 are aligned with holes in the fitting members 21 of the HS band 2, and bolts B are passed through the aligned holes. Then, nuts N are fastened to the bolts B, whereby the resin plate 3 is fixed. In practice, a bezel and the HS band 2 are fixed by the bolts B.

By such fixing, the resin panel 3 can be easily fitted to the panel 11 of the cathode ray tube 1, can be rigidly fixed by the adhesive and the combination of the bolts B and the nuts N, and can be prevented from being sucked into the inside upon implosion, so that scattering of glass pieces can be prevented.

As has been described above, according to the present invention, by not only adhering the resin panel to the panel but also mechanically fixing the resin panel with the HS band, it is possible to enhance explosion-proof characteristics. Particularly, even where the material thickness of glass is reduced in a lightweight glass bulb and implosion energy is increased, explosion-proof characteristics can be enhanced with minimized increases in weight and cost, and a reduction in weight of the cathode ray tube can be realized.

## Claims

1. A cathode ray tube comprising an explosion-proof band surrounding the peripheral edge of a cathode ray tube panel, and a resin panel disposed in the state of covering the surface of said cathode ray tube panel and connected to said explosion-proof band.

2. A cathode ray tube as set forth in claim 1, wherein the surface of said cathode ray tube panel and said resin panel are fixed with an adhesive.

3. A cathode ray tube as set forth in claim 1, wherein said resin panel and said explosion-proof band are fixed with an adhesive.

4. A cathode ray tube as set forth in claim 1, wherein said resin panel and said explosion-proof band are fixed mechanically.

5. A cathode ray tube as set forth in claim 4, wherein said resin panel and said explosion-proof band are fixed with bolt/nut pairs.

6. A cathode ray tube as set forth in claim 4, wherein said resin panel and said explosion-proof band are fixed with a wire.

7. A cathode ray tube as set forth in claim 1, wherein said resin panel and said explosion-proof band are connected through fitting members for fitting to a display device casing.

## Amended claims

### Amended claims under Art. 19.1 PCT

**1.** A cathode ray tube comprising an explosion-proof band surrounding the peripheral edge of a cathode ray tube panel, and a resin panel disposed in the state of covering the surface of said cathode ray tube panel and connected to said explosion-proof band.

**2.** (Deleted)

**3.** A cathode ray tube as set forth in claim 1, wherein said resin panel and said explosion-proof band are fixed with an adhesive.

**4.** A cathode ray tube as set forth in claim 1, wherein said resin panel and said explosion-proof band are fixed mechanically.

**5.** A cathode ray tube as set forth in claim 4, wherein said resin panel and said explosion-proof band are fixed with bolt/nut pairs.

**6.** A cathode ray tube as set forth in claim 4, wherein said resin panel and said explosion-proof band are fixed with a wire.

**7.** (Deleted)
